# EUROPEAN PATENT SPECIFICATION

(11) **EP 1 138 198 B1**
(45) Date of publication and mention of the grant of the patent: **07.07.2004**
(21) Application number: 01106399.7
(22) Date of filing: 20.03.2001
(51) Int. Cl.: A01K 83/00

(54) **Fishhook**
Angelhaken
Hameçon

(30) Priority: 24.03.2000 JP 2000084055
(43) Date of publication of application: 04.10.2001
(73) Proprietor: Gamakatsu Co., Ltd., Nishiwaki-shi, Hyogo (JP)
(72) Inventor: Asada, Naohiro, Gamakatsu Co., Ltd, Nishiwaki-shi, Hyogo (JP)
(74) Representative: Patentanwälte Hauck, Graalfs, Wehnert, Döring, Siemons, Schildberg

(56) References cited:
- WO-A-97/06673
- DE-C- 517 114
- PATENT ABSTRACTS OF JAPAN vol. 1999, no. 04, 30 April 1999 (1999-04-30) & JP 11 000080 A (KISHIDA YOSHIHISA), 6 January 1999 (1999-01-06)

## Description

### BACKGROUND OF THE INVENTION

### Field of the Invention

The present invention relates to an improvement of a fishhook's joint with respect to a "leader" part of a fishing line.

### Prior Art

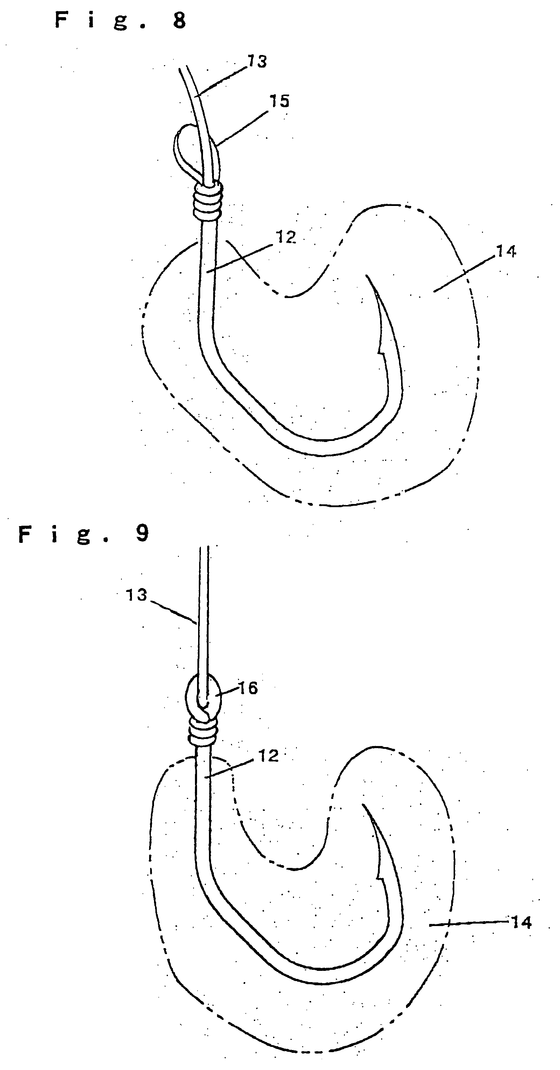

A fishhook hitherto generally used does as shown in Fig.8 comprise a stem 12 having a widened part 15 at an end opposite to the point of hook and is tied or connected, at a part (a hook's eye) below the widened part 15, with the "leader" part 13 of the fishing line. Otherwise, as seen in Fig. 9, the hook stem 12 has at that end a ring element 16 through which the fishing line's leader part 13 passes to be tied and connected with the hook. The widened part 15 and the ring element 16 are generally shaped in such way as largely extended outwards at both lateral sides of the hook stem 12. Hence, it is difficult that a live bait, such as a worm, when applied onto the hook is guided to the leader part 13 of f ishing line beyond the widened part 15 or ring element 16. Fishing is done generally with the stem portion 12 of fishhook piercing the bait 14 as shown in Figs. 8 and 9.

The widened part 15 or ring element 16 when not covered with the bait and merely exposed cause fish to feel a sense of incongruity, and fish do not take the bait. In case that the widened part 15 or ring element 16 is covered with the bait to prevent the problem, the inside of the live bait is hurt or damaged by the extended parts of the widened part 15 or ring element 16. Internal organs of the live bait that fish very likely eat are washed away in a short time, and only skin of the live bait would be kept on the fishhook, resulting again in fish's insufficient or poorly taking the bait or that fish do not take the bait. Furthermore, kinds of the baits to be used and methods for fitting baits on the hook may generally differ correspondingly to fish to be caught. The conventional fishhooks have such defect that characteristics of different kinds of baits and different methods for fitting baits on the hook corresponding to fish to be caught are not fully shown.

### Brief Description of the Invention

An object of the present invention is to provide a fishhook in which the above problems seen in the conventional fishhooks structured as conventionally are solved; baits are smoothly applied, without being hurt, to the hook; the baits when using an ark shell, a turban shell or the like are prevented from slipping down due to a pull of f ish and a tide; in case of fishing a parrot fish in which baits arranged at the side of the "leader" part of fishing line are dropped, in order, to the side of hook, movement of the baits are smooth; the leader part of fishing line when tied on the hook is prevented from shifting in position or slackening so as to enable the hook to be excellently engaged wi th fish; and strength of tying between the hook and the fishing line's leader part is improved.

### Detailed Description of the Invention

The present invention relates to a fishhook which comprises a stem which has at both lateral sides at one end to form projections extending slantwise outwards or inwards, a recess, a through bore being formed below the recess through which bore a leader part of fishing line is inserted. In this way the hook is tied with the leader part of fishing line with the tying section of the fishing line leader part being fully accommodated in the recess.

### BRIEF DESCRIPTION OF THE DRAWINGS

Fig. 1 is a front view showing an example of a fishhook according to the present invention.
Fig. 2 is a partially sectional view showing an example of the fishhook according to the present invention.
Fig. 3 is a partially enlarged side view showing the hook's "eye" part.

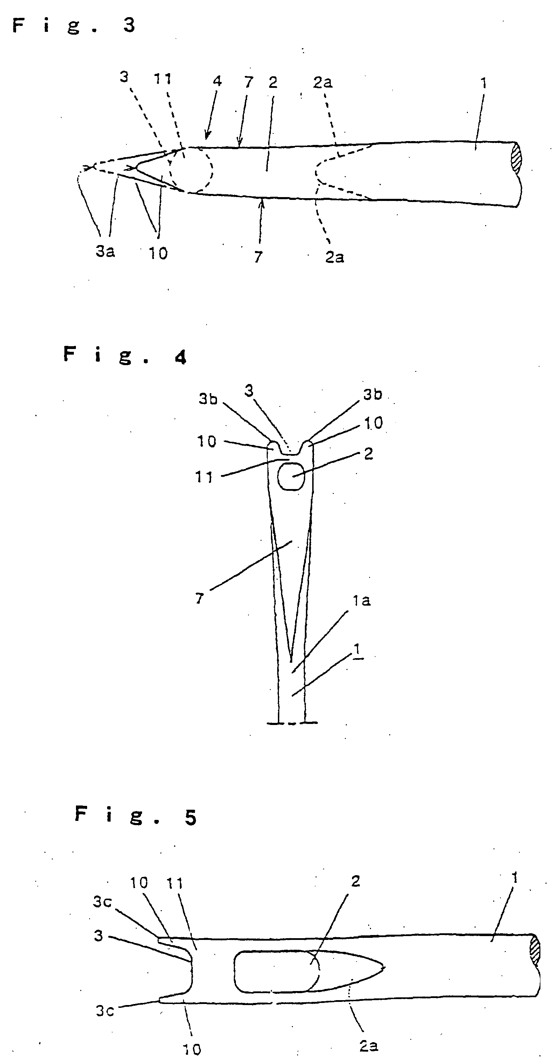

Fig. 4 is a partial front view showing a further example of the present invention.
Fig. 5 is a partial front view showing a further modified example of the present invention.
Fig. 6 is a partial front view showing an example of the present invention.
Fig. 7 is a partial front view showing an example of the present invention.
Fig. 8 is a perspective view showing a conventional fishhook.
Fig. 9 is a perspective view showing another conventional fishhook.

### PREFERRED EMBODIMENTS OF THE INVENTION

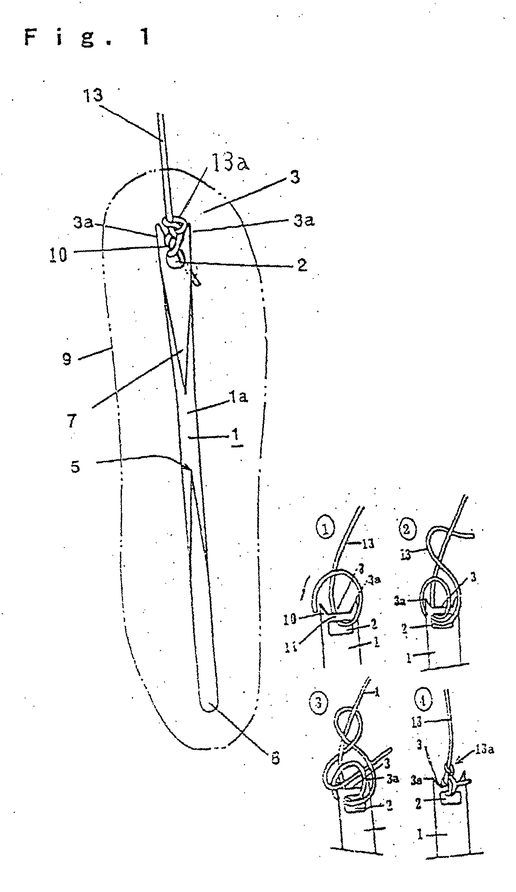

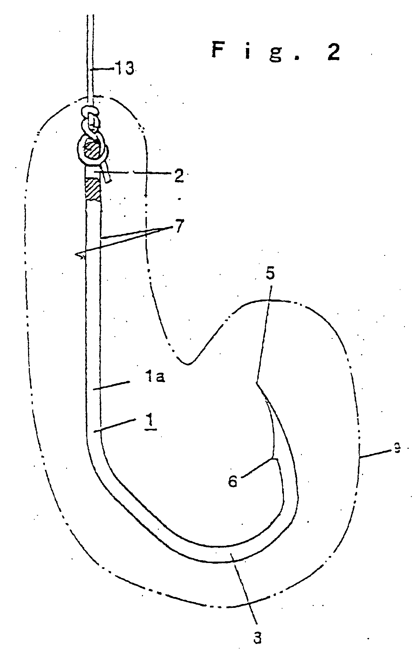

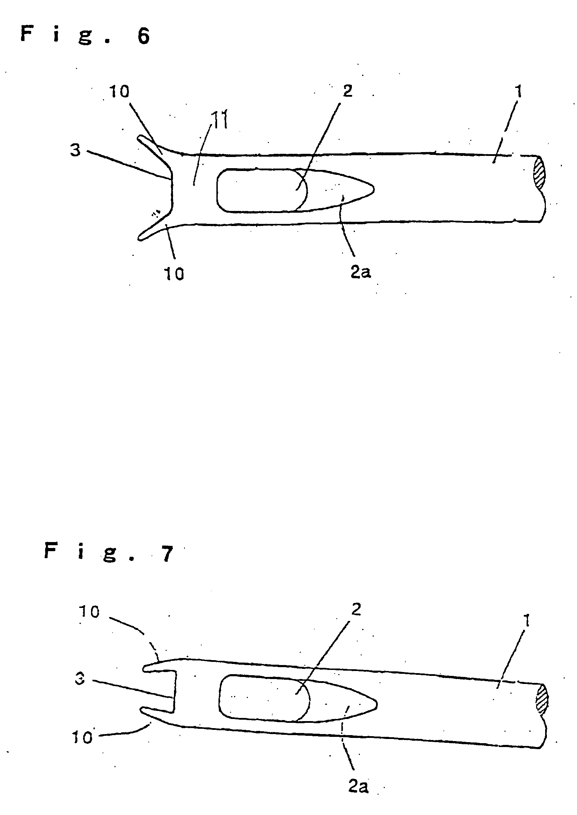

Next, the present invention will be further detailed with referring to the examples shown in the attached drawings. A fishhook body 1 does, as shown in Figs. 1 and 2, use wire having a bend 8 curving in a hook-like shape, a point 5 formed by sharpening an end of the bend 8, and a barb 6 slightly inwards of the point 5. In addition, as seen in Fig. 6, at both lateral sides of an end of a stem 1a are formed projections 10 which extend slantwise outwards to define a recess 3. A through bore 2 sized enough to allow a leader part 13 of fishing line to pass through is formed near or slightly below the recess 3. The projections 10 extending slantwise outwards are able to keep the baits at the utmost end of the projections 10 and prevent the baits from slipping down from the fishhook due to a pull of hooked fish, a tide or the like, whereby providing a fishhook most suitable for use of a solid bait such as shellfish. In Figs. 1 and 2, reference numeral 9 denotes a bait.

The above exemplifies the recess 3 defined by the projections 10 extending slantwise outwards. The recess 3 may otherwise be formed, as shown in Fig. 7, by projections 10 extending slantwise inwards. In detail, upon fishing a parrot fish or the like, the baits, such as an arc shell, a turban shell or the like are cut into small pieces to be applied, in a manner of being linked togther, onto the fishing line leader part, so that the baits can be moved, in order, to the side of the fishhook from the leader part side. The projections 10 extending slantwise inwards provides a fishhook having such characteristic that the baits are moved smoothly toward the point of hook.

Fig. 3 shows another example of a fishhook according to the present invention which has a flat part 7 tapered or decreasing in thickness of the stem 1a from a part near the through bore 2 to the projections 10 by pressing the end portion of the stem la. The fishing line leader part when wound and tied on a leader-part tying section 11 is prevented from being bulky. Furthermore, Fig. 5 shows a modified example of the invention wherein the through bore 2 is provided at the side of hook body 1 with a slant 2a, and the leader-part tying section 11 formed between the recess 3 and the through bore 2 has a longitudinal cross-section in a round shape or a curved surface having no corners. By this, an end of the fishing line leader part can be naturally guided into the through bore 2 to be readily applied or enabled to easily pass through the throughbore 2 , and strength of tying between the fishhook and fishing line leader part can be improved.

The hook body 1 according to the present invention is structured as above. Tying the fishhook with the fishing line leader part 13 is carried out in such manner shown in (1) to (4) in Fig. 1 that the fishing line leader part 13 is wound twice around the leader-part tying section 11 between the recess 3 and bore 2 to form loops; and an end of the leader-part 13 is entangled with the leader part 13, inserted into the loops and then tightened, so that the tie 13a can be tightly accommodated in the recess 3.

### EFFECTS OF THE INVENTION

The fishhook according the present invention merely has at the end the recess and the through bore sized enough to allow the fishing line leader part to pass through. The fishhook's joint according to the present invention does not have a largely extended or widened part seen in the conventional hooks and thereby enables baits to be smoothly guided toward or to the fishing line leader part. As a result, there are provided such notable advantages that baits can be kept for a long time and be excellently taken by fish without giving them a sense of incongruity; and shapes of utmost ends of the projections 10 at the end of the stem may be modified to provide a most suitable fishhook corresponding to baits to be used and kinds of fish to be caught, and such fishhook may be used to facilitate a catch.

In detail, fishing with a rod and line for obtaining a smelt-whiting, a flatfish or the like may often use a "worm" bait, such as a green caterpillar. The worm bait when applied to the conventional fishhook easily falls from the hook due to picking by fish or a tide, and anglers need to keep their minds on the baits applied on the hook. The structure of the fishhook disclosed in Claim 1 has an advantage that the outwardly extending projections keep the baits and avoid the defect of the conventional fishhook as causing the baits to easily fall.

Upon fishing a parrot fish, a bait, for example, shellfish such as an arc shell and a turban shell are cut into small pieces, pierced from the hook's point to be guided in order toward the fishing line leader part and applied as linked together, so that as baits at the side of hook's point fall, baits at the fishing line leader-part are moved down in order. In this case, it is a key for facilitating a catch that the baits placed at upper part are moved down smoothly following falling of the baits at the hook's point side. The structure of a fishhook disclosed in Claim 2 has such advantage that moving down of the baits at the upper part are smooth in comparison with the conventional fishhook, thereby facilitating a catch. Moreover, the structure of fishhook disclosed in Claim 3 prevents the tying section of the fishing line leader part from being bulky, thereby further facilitating or enabling the baits to be moved smoothly.

In addition, the fishing line leader part when tied on the fishhook can be accommodated, at a root part of the tie, into the recess, so that there provide such advantages as there is not found any shifting of the line seen in the conventional fishhook provided with the ring element, while the fishhook can be excellently taken by fish and a delicate bite can be accurately perceived by anglers.

## Claims

1. A fishhook comprising a stem (1a), which has at both lateral sides at one end projections (10) extending slantwise outwards to form a recess (3), a through bore (2) being formed below the recess (3) through which bore a leader part (13) of a fishing line is inserted.

2. A fishhook comprising a stem (1a), which has at both lateral sides at one end projections (10) extending slantwise inwards to form a recess (3), a through bore (2) being formed below the recess (3) through which bore a leader part (13) of fishing line is inserted.

3. A fishhook as set forth in Claim 1 and 2 wherein the stem is provided with a flat part (7) gradually decreasing in thickness from the through bore (2) toward the projections (10).

## Patentansprüche

1. Angelhaken mit einem Schaft (1a), der auf beiden Seiten an einem Ende Vorsprünge (10) aufweist, die sich schräg nach außen erstrecken, um eine Ausnehmung (3) zu bilden, wobei unterhalb der Ausnehmung (3) eine Durchgangsbohrung (2) gebildet ist und durch diese Bohrung ein Vorderteil (13) einer Angelschnur eingesetzt ist.

2. Angelhaken mit einem Schaft (1a), der auf beiden Seiten an einem Ende Vorsprünge (10) aufweist, die sich schräg nach innen erstrecken, um eine Ausnehmung (3) zu bilden, wobei unterhalb der Ausnehmung (3) eine Durchgangsbohrung (2) gebildet ist und durch diese Bohrung ein Vorderteil (13) einer Angelschnur eingesetzt ist.

3. Angelhaken nach Anspruch 1 und 2, wobei der Schaft mit einem flachen Teil (7) versehen ist, dessen Dicke von der Durchgangsbohrung (2) zu den Vorsprüngen (10) hin allmählich abnimmt.

## Revendications

1. Hameçon comprenant une tige (1a) qui comporte au niveau de deux côtés latéraux au niveau d'une extrémité, des protubérances (10) s'étendant en biais vers l'extérieur pour former un creux (3), un trou traversant (2) étant formé sous le creux (3) au travers duquel trou, une partie avant (13) d'une ligne de pêche est insérée.

2. Hameçon comprenant une tige (1a) qui comporte au niveau de deux côtés latéraux au niveau d'une extrémité, des protubérances (10) s'étendant en biais vers l'intérieur pour former un creux (3), un trou traversant (2) étant formé sous le creux (3) au travers duquel trou, une partie avant (13) de la ligne de pêche est insérée.

3. Hameçon selon la revendication 1 ou 2, dans lequel la tige est munie d'une partie plate (7) diminuant progressivement en épaisseur à partir du trou traversant (2) vers les protubérances (10).
